# EUROPEAN PATENT SPECIFICATION

(11) **EP 2 196 807 B1**
(45) Date of publication and mention of the grant of the patent: **23.05.2012**
(21) Application number: 08021381.2
(22) Date of filing: 09.12.2008
(51) Int. Cl.: G01P 3/44, G01P 3/22, F03D 7/02, G01D 5/32

(54) **Arrangement to detect a high rotational-speed of a blade**
Anordnung zum Erkennen einer hohen Drehzahl einer Klinge
Agencement pour détecter la vitesse de rotation élevée d'une pale

(43) Date of publication of application: 16.06.2010
(73) Proprietor: Siemens Aktiengesellschaft, 80333 München (DE)
(72) Inventor: Egedal, Per, 7400 Herning (DK); Kjeldsen, Jens, Christian, 7400 Herning (DK)

(56) References cited:
- EP-A- 1 359 321
- EP-A- 1 780 523
- GB-A- 2 448 940

## Description

The invention relates to an arrangement to detect a high rotational-speed of a blade, especially of a wind-turbine-blade.

The rotational-speed of wind-turbine-blades has to be monitored continuously to prevent damages, which result from e.g. high wind-speeds acting on the blade.

If the rotational-speed exceeds a predefined value the wind-blades has to be turned out from the wind to decrease the rotational speed.

The rotational-speed of blades can be detected precisely, if a sensor is placed at the rotating blade. The sensor is prepared to detect an actual centrifugal or centripetal force, acting on the blade because of its rotation.

If the measured force is too high, a signal is transmitted by help of electrical wires to a control-unit for further processing. The control-unit may be part of the wind-turbine in a preferred embodiment.

The used electrical wires need to be protected from lightning to avoid lightning damages of the whole system.

This wire-bound system is expensive and complex because of the needed lightning-protection.

EP 1 780 523 Al discloses a wind turbine monitoring system. A wind turbine blade includes one or more glass fibers. The glass fibers span across a portion of the blade for its monitoring. An optical receiver is in optical communication with one end of the fiber while a light source is in optical communication with the other end of the fiber.

The light source and the optical receiver are arranged asides the root end of the blade preferably. Light transmission through the optical fiber is monitored to detect any changes thereto. A change in the light transmission indicates a break in the optical fiber and thus indicates a maximum tensile load, which can be applied to the blade.

It is therefore the aim of the invention, to provide an improved arrangement to detect a high rotational-speed of a rotating blade.

This aim is solved by the features of claim 1.

Preferred embodiments of the invention are subject of the dependent claims.

According to the invention an arrangement is used to determine the rotational-speed of a blade, which rotates around an axis. A transmit-unit is located at the rotating blade, while a receive-unit is located at the rotating hub of the blade. The transmit-unit and the receive-unit are connected by a transmission-system, which is used to transmit a signal from the transmit-unit to the receive-unit. A detection-unit is located at the blade, which is used to detect a force acting on the blade because of its rotation. The detection-unit is built to interrupt the transmission of the signal, if the detected force exceeds a predetermined value. The receive-unit comprises a control-unit, which detects a high rotational-speed of the blade by evaluating the interrupted transmission of the signal.
The transmission-system is built as an optical-transmission system, which transmits an optical-signal from the transmit-unit to the receive-unit for the evaluation.

According to the invention at least one optical-signal is transmitted, to be used for the detection of an high rotational-speed. So the receive-unit and the transmit-unit are isolated galvanically from each other. So there is no need to use metallic connections between them for a wire-bound signal-transmission. This results in less effort in view of a needed lightning-protection.

In a preferred embodiment an optical sensor-unit is placed at the blade, in a certain distance from the hub. Because of this the precision of the inventive arrangement is improved, as centrifugal-forces, acting on the rotating elements, are relative to a radius of the circular movement.

The inventive arrangement is constructed as a so called "fail-safe-arrangement" in many ways. Any failure, detected by the control-unit by the interrupted signal-transmission, is resulting in an error-message.

So any failure within the optical transmission-system (light-source, optical-fibres, interrupter, light-detector) is determined.

The invention will be shown in more detail by help of some drawings.
- FIG 1: shows the inventive method by help of a simplified block diagram,
- FIG 2: shows a first example to build an interrupter, used for the invention, and
- FIG 3: shows another example to build an interrupter, used for the invention.

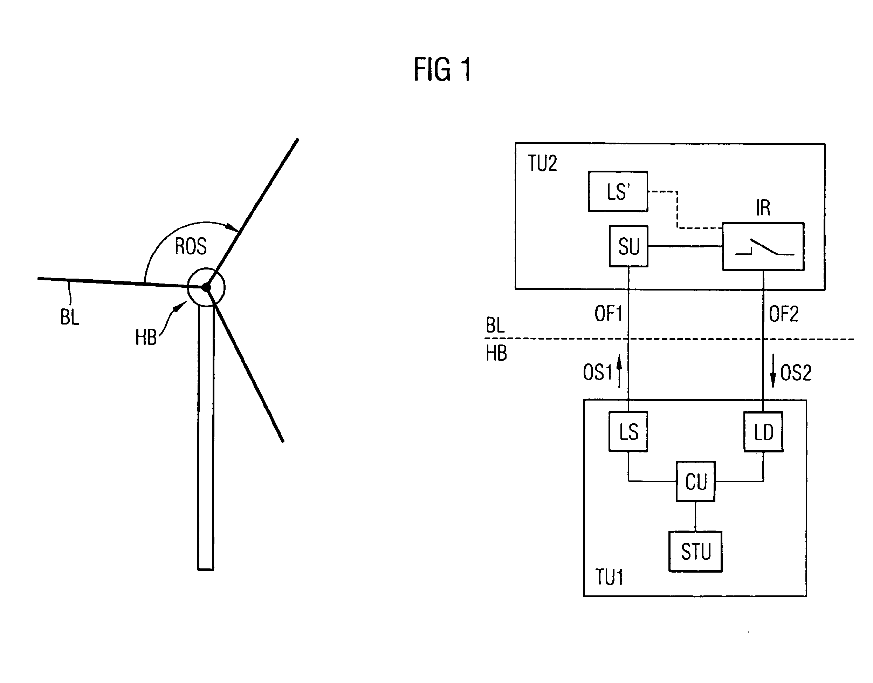

FIG 1 shows the inventive method by help of a simplified block diagram. An exceeding rotational-speed ROS of a blade BL, which rotates around an axis, is detected by the help of a first transmit/receive-unit TU1 and by help of a second transmit/receive-unit TU2.

The first transmit/receive-unit TU1 is located at a rotating hub HB of a wind-turbine, for example. The second transmit/receive-unit TU2 is located at the rotating blade BL.

The first transmit/receive-unit TU1 and the second transmit/receive-unit TU2 are connected with two optical fibres OF1, OF2.

A first optical-fibre OF1 is used to transmit an optical first signal OS1 from the first transmit/receive-unit TU1 to the second transmit/receive-unit TU2, while a second optical-fibre OF2 is used to transmit an optical second signal OS2 from the second transmit/receive-unit TU2 to the first transmit/receive-unit TU1.

The second transmit/receive-unit TU2 may comprise a sensor-unit SU. This sensor-unit SU receives the transmitted optical signal OS1, which is generated and sent by the first transmit/receive-unit TU1 via the optical fibre OF1 to the second transmit/receive-unit TU2.

The sensor-unit SU is coupled with an interrupter IR, which is used as detection-unit. It detects a centrifugal or a centripetal force, which is acting on the blade BL because of its rotation. So this force is dependent from the rotational-speed ROS of the blade.

The interrupter IR is built to interrupt the transmission of the second signal OS2, if the detected force exceeds a predetermined value.

Because of this the sensor-unit SU only transmits the optical-signal OS1 back to the first transmit/receive-unit TU1 as optical signal OS2, if the rotational-speed ROS of the blade BL or even the related force acting on the blade BL is below a predefined value.

If the two optical fibres OF1, OF2 are optically connected with the interrupter IR, the sensor-unit SU may be omitted. In this case the interrupter IR is part of the optical transmission-path between the two fibres.

If the force exceeds the predefined value, the interrupter IR prevents the transmission of the optical-signal OS2 back to the first transmit/receive-unit TU1. So the interrupter IR may be any suitable configuration, acting as a switch.

The first transmit/receive-unit TU1 comprises a light detector LD, which is used to detect the optical-signal OS2, while this signal OS2 is transmitted from the second transmit/receive-unit TU2 to the first transmit/receive-unit TU1.

As both transmit/receive-units TU1, TU2 are rotating, they can be constantly connected to each other via the optical fibres OF1, OF2.

As described above the optical-signal OS2 will be only transmitted as long as the rotational speed ROS of the blade BL is below the predefined speed-value.

The control-unit CU is located preferably at the hub HB, within a lightning-protected zone.

So the control-unit CU will detect an interruption of the transmission of the second optical-signal OS2, which is caused by an exceeding rotational-speed ROS of the blade BL.

In this case the blade might be taken out from the wind, for example by a variation of the blade-angle, to reduce the active area of the blade attacked by the wind. So the rotational-speed ROS of the blade BL will be reduced.

The blade BL is taken out from the attacking wind by help of a steering-unit STU, which is connected with the control-unit CU.

In the example shown in FIG 1 the first transmit/receive-unit TU1 contains a light-source LS, for example a light emitting diode or a laser diode, to generate the first optical-signal OS1.

The first transmit/receive-unit TU1 also contains a light-detector LD, for example a photodiode or a photo transistor, to detect or to receive the second optical-signal OS2.

In the example described above the first optical-signal OS1 is originated and sent by the first transmit/receive-unitTU1 and is received by the second transmit/receive-unit TU2. Then it is put through the sensor-unit SU and the interrupter IR to be used as second optical-signal OS2 for retransmission.

Because of this there are no active elements located inside the rotating blades BL.

In another embodiment the second optical-signal OS2 is generated at the side of the blade BL, so a reduction of the described optical-transmission-system is possible.

So the first optical-fibre OF1, the sensor-unit SU and also the light-source LS can be removed, while the second transmit/receive-unit TU2 will contain a light source LS' to generate the optical-signal OS2. This optical-signal is fed into the interrupter IR for the desired retransmission.

So the functionality of the first transmit/receive-unit TU1 is reduced to a simple receiver-function, while the functionality of the second transmit/receive-unit TU2 is reduced to a simple transmitter-function.

The light-source LS, LS' and the light-detector LD are selected in dependency of their sensitivity to other external light sources. The sensitivity should be as low as possible, to prevent that external light sources influence the functionality of the described system.

To ensure the sensitivity, the used light-source LS, LS' generates in a preferred embodiment an optical-signal OS1, OS2 with a predefined wavelength. It is also possible to modulate the optical-signal OS1, OS2 with a certain pattern and/or with a certain frequency.

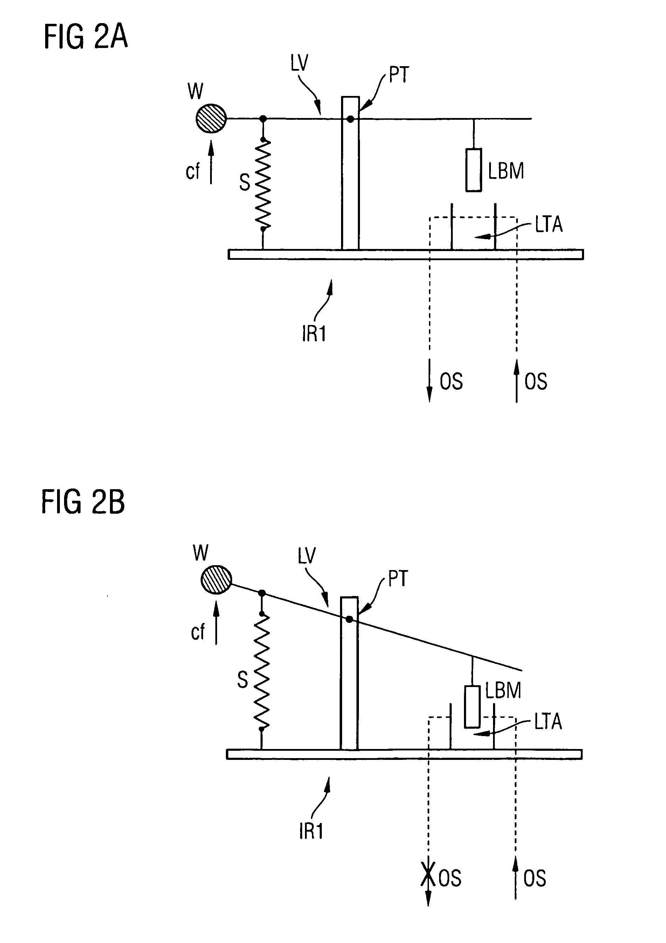

FIG 2A and FIG 2B show a first example to build an interrupter IR1, used for the invention. FIG 2A show the interrupter IR1 in an inactive state.

A lever LV is mounted rotatable around a point PT. A first side of the lever LV is balanced by help of a spring S and carries also a weight W. A light-blocking-material LBM is located at a second side of the lever LV.

An optical-signal OS is allowed to pass through a light-transmission-area LTA of the interrupter IR1, as long as the rotational-speed of the blade or a related force cf is below a predefined value.

The centrifugal or centripetal force CF is related to the rotational-speed of the blade. This force cf is acting on the weight W of the lever LV, while the lever LV is balanced by help of the weigth W and the spring S.

Because of this the light-blocking-material LBM is kept clear from the light-transmission-area LTA, as long as the force is below the predefined value.

FIG 2B shows the interrupter IR1 in an active state.

If the rotational-speed of the blade exceeds the predefined wind-speed, the force CF will grow. As it is acting at the weight W, the lever LV is forced to rotate around the point PT.

Because of this rotation the light-blocking-material LBM is moved into the light-transmission-area LTA, so the optical-signal OS is blocked to be transmitted.

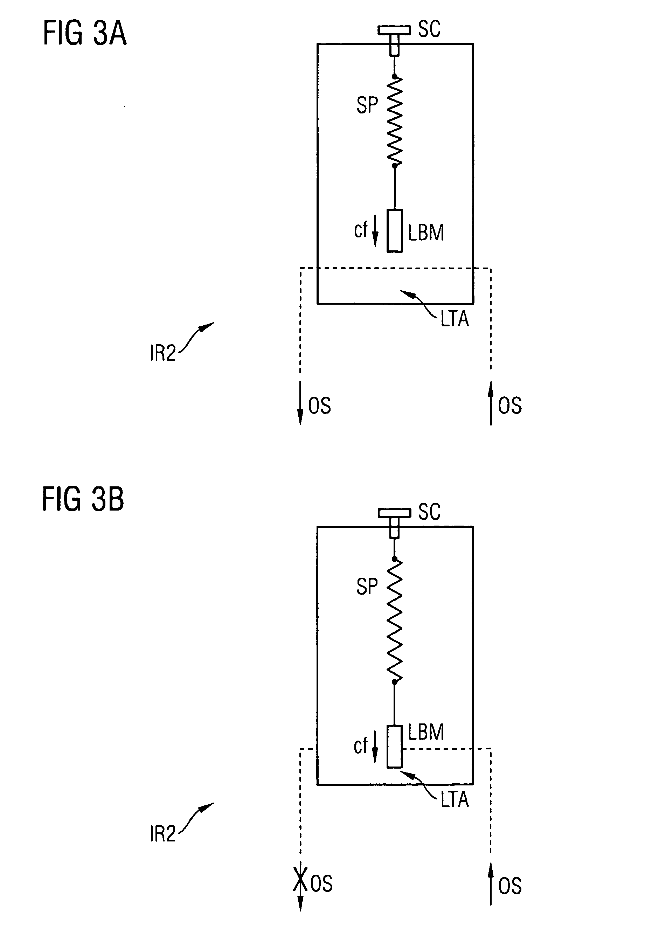

FIG 3 shows another example to build an interrupter IR2, used for the invention.

FIG 3A shows the interrupter IR2 in an inactive state.

A spring SP is connected with its first side with a screw SC, while the screw SC is used for calibration purposes.

A second side of the spring SP is connected with a light-blocking-material LBM, which can be moved inside a light-transmission-area LTA.

An optical-signal OS is allowed to pass through the light-transmission-area LTA of the interrupter IR2, as long as the rotational-speed of the blade and therefore the force cf is below the predefined value.

The force CF is acting on the light-blocking-material LBM, while the light-blocking-material LBM is kept clear from the light-transmission-area LTA by help of the calibrated spring SP.

FIG 3B shows the interrupter IR2 in an active state.

If the rotational speed of the blade increases, the centrifugal force CF will grow. As it is acting on the light-blocking-material LBM, the light-blocking-material LBM is moved into the light-transmission-area LTA, if the force cf exceeds the predefined value. So the optical-signal OS is blocked to be transmitted.

FIG 2 and FIG 3 show basic solutions for the interrupter, realised as "mass-spring"-system, which moves a kind of piston to interrupt the optical signal-transmission.

It is also within the scope of the invention to use any kind of controlled switch or interrupter, while its control is done in dependency of the rotational speed of the rotating blade.

## Claims

1. Arrangement to determine the rotational-speed of a blade (BL), which rotates around an axis,
- where a transmit-unit (TU2) is located at the rotating blade (BL),
- where a receive-unit (TU1) is located at the rotating hub (HB) of the blade (BL),
- where the transmit-unit (TU2) and the receive-unit (TU1) are connected by optical-transmission system, which is used to transmit an optical signal (OS2) from the transmit-unit (TU2) to the receive-unit (TU1),
- where the transmit-unit (TU2) comprises a detection-unit (IR) located at the blade,
- where the detection-unit (IR) is an interrupter that interrupts the transmission of the signal (OS2), if the detected force, acting on the blade (BL) because of its rotation, exceeds a predetermined value,
- where the receive-unit (TU1) comprises a control-unit (CU), which detects a high rotational-speed (ROS) of the blade (BL) by evaluating the interrupted transmission of the signal (OS2),
**characterized in that**:
- the interrupter (IR1, IR2) comprises mechanical elements (W,S,LV,PT,SC,SP), which are moved in dependency of a centrifugal or a centripetal force (cf), while the force is related to the rotational-speed (ROS) of the blade (BL),
- that the mechanical elements (W,S,LV,PT,SC,SP) are coupled with optical-means (LTA,LBM), which interrupt or allow a transmission of the optical signal (OS).

2. Arrangement according to claim 1, **characterized in, that** the transmit-unit (TU2) and the receive-unit (TU1) are connected with at least one optical fibre (OF2) to transmit the optical-signal (OS2).

3. Arrangement according to claim 2, **characterized in, that** the control-unit is connected with a steering-unit (STU), which turns the blade (BL) out of the attacking wind if the transmission of the optical-signal (OS2) is interrupted.

4. Arrangement according to claim 1, **characterized in,**
- **that** the receive-unit (TU1) is part of a first transmit/receive-unit (TU1), which comprises a light-source (LS) for the generation of a first optical-signal (OS1),
- **that** the transmit-unit (TU2) is part of a second transmit/receive-unit (TU2), which comprises an optical-sensor (SU) for the receiving of the first optical-signal (OS1),
- **that** the light-source (LS) and the optical-sensor (SU) are connected by a first optical fiber (OF1) to transmit the first optical-signal (OS1) from the first transmit/receive-unit (TU1) to the second transmit/receive-unit (TU2).

5. Arrangement according to claim 4, **characterized in,**
- **that** the second transmit/receive-unit (TU2) comprises the interrupter (IR),
- **that** the first transmit/receive-unit (TU1) comprises a light-detector (LD),
- **that** the interrupter (IR) and the light-detector (LD) are connected by a second optical fiber (OF2),
- **that** the interrupter (IR) is inserted between the sensor-unit (SU) and the second optical fiber (OF2),
- while the first optical-signal (OS1) is generated and sent from the light-source (LS) of the first transmit/receive-unit (TU1) to the sensor-unit (SU) of the second transmit/receive-unit (TU2), the first optical-signal (OS1) is received by the sensor-unit (SU) and is passed through the interrupter (IR), if the detected force is below the predefined value and while the first optical-signal (OS1) is sent back as second optical-signal (OS2) from the interrupter (IR) to the light-detector (LD).

6. Arrangement according to claim 1, **characterized in,**
- **that** the transmit-unit (TU2) comprises a light-source (LS') for the generation of the optical-signal (OS2),
- **that** the transmit-unit (TU2) comprises an interrupter (IR) as part of the detection-unit,
- **that** the receive-unit (TU1) comprises a light-detector (LD),
- **that** the interrupter (IR) and the light-detector (LD) are connected by an optical fiber (OF2),
- **that** the interrupter (IR) is inserted between the light-source (LS) and the optical fiber (OF2),
- while the optical-signal (OS2) is generated and sent from the light-source (LS) to the interrupter (IR) and is passed through the interrupter (IR) only, if the detected force is below the predefined value and while the optical-signal (OS2) is sent in this case from the interrupter (IR) to the light-detector (LD).

7. Arrangement according to one of the preceding claims, **characterized in, that** the light-source (LS, LS') is a light emitting diode or a laser diode.

8. Arrangement according to one of the preceding claims, **characterized in, that** the light-detector (LD) is a photodiode or a photo transistor.

9. Arrangement according to one of the preceding claims, **characterized in, that** the transmitted optical-signal (OS1, OS2) show a predefined wavelength and/or a predefined modulation and/or a predefined pattern and/or a predefined frequency to avoid interferences with optical-signals of the environment of the blade (BL).

10. Arrangement according to claim 1, **characterized in, that** the blade (BL) and hub (HB) are part of a wind-turbine.

## Patentansprüche

1. Anordnung zum Bestimmen der Drehzahl eines Blattes (BL), welches um eine Achse rotiert,
- wobei eine Sendeeinheit (TU2) an dem rotierenden Blatt (BL) angeordnet ist,
- wobei eine Empfangseinheit (TU1) an der rotierenden Nabe (HB) des Blattes (BL) angeordnet ist,
- wobei die Sendeeinheit (TU2) und die Empfangseinheit (TU1) durch ein optisches Übertragungssystem verbunden sind, welches verwendet wird, um ein optisches Signal (OS2) von der Sendeeinheit (TU2) zu der Empfangseinheit (TU1) zu senden,
- wobei die Sendeeinheit (TU2) eine Detektionseinheit (IR) umfasst, die an dem Blatt angeordnet ist,
- wobei die Detektionseinheit (IR) ein Unterbrecher ist, welcher die Übertragung des Signals (OS2) unterbricht, wenn die detektierte Kraft, die auf das Blatt (BL) infolge seiner Rotation wirkt, einen Vorbestimmten Wert überschreitet,
- wobei die Empfangseinheit (TU1) eine Steuereinheit (CU) umfasst, welche eine hohe Drehzahl (ROS) des Blattes (BL) detektiert, indem sie die unterbrochene Übertragung des Signals (OS2) auswertet,
**dadurch gekennzeichnet, dass**:
- der Unterbrecher (IR1, IR2) mechanische Elemente (W, S, LV, PT, SC, SP) umfasst, welche in Abhängigkeit von einer Zentrifugal- oder einer Zentripetalkraft (cf) bewegt werden, wobei die Kraft mit der Drehzahl (ROS) des Blattes (BL) zusammenhängt,
- die mechanischen Elemente (W, S, LV, PT, SC, SP) mit optischen Mitteln (LTA, LBM) gekoppelt sind, welche eine Übertragung des optischen Signals (OS) unterbrechen oder ermöglichen.

2. Anordnung nach Anspruch 1, **dadurch gekennzeichnet, dass** die Sendeeinheit (TU2) und die Empfangseinheit (TU1) mit mindestens einem Lichtwellenleiter (OF2) verbunden sind, um das optische Signal (OS2) zu übertragen.

3. Anordnung nach Anspruch 2, **dadurch gekennzeichnet, dass** die Steuereinheit mit einer Lenkeinheit (STU) verbunden ist, welche das Blatt (BL) aus der Windrichtung dreht, wenn die Übertragung des optischen Signals (OS2) unterbrochen wird.

4. Anordnung nach Anspruch 1, **dadurch gekennzeichnet,**
- **dass** die Empfangseinheit (TU1) Teil einer ersten Sende-/Empfangseinheit (TU1) ist, welche eine Lichtquelle (LS) zur Erzeugung eines ersten optischen Signals (OS1) umfasst,
- **dass** die Sendeeinheit (TU2) Teil einer zweiten Sende-/Empfangseinheit (TU2) ist, welche einen optischen Sensor (SU) zum Empfangen des ersten optischen Signals (OS1) umfasst,
- **dass** die Lichtquelle (LS) und der optische Sensor (SU) durch einen ersten Lichtwellenleiter (OF1) verbunden sind, um das erste optische Signal (OS1) von der ersten Sende-/Empfangseinheit (TU1) zu der zweiten Sende-/Empfangseinheit (TU2) zu übertragen.

5. Anordnung nach Anspruch 4, **dadurch gekennzeichnet,**
- **dass** die zweite Sende-/Empfangseinheit (TU2) einen Unterbrecher (IR) umfasst,
- **dass** die erste Sende-/Empfangseinheit (TU1) einen Lichtdetektor (LD) umfasst,
- **dass** der Unterbrecher (IR) und der Lichtdetektor (LD) durch einen zweien Lichtwellenleiter (OF2) verbunden sind,
- **dass** der Unterbrecher (IR) zwischen der Sensoreinheit (SU) und dem zweien Lichtwellenleiter (OF2) eingefügt ist,
- wobei das erste optische Signal (OS1) von der Lichtquelle (LS) der ersten Sende-/Empfangseinheit (TU1) erzeugt und zu der Sensoreinheit (SU) der zweien Sende-/Empfangseinheit (TU2) gesendet wird, das erste optische Signal (OS1) von der Sensoreinheit (SU) empfangen wird und durch den Unterbrecher (IR) geleitet wird, falls die detektierte Kraft kleiner als der vordefinierte Wert ist, und wobei das erste optische Signal (OS1) als zweites optisches Signal (OS2) von dem Unterbrecher (IR) zu dem Lichtdetektor (LD) zurückgesendet wird.

6. Anordnung nach Anspruch 1, **dadurch gekennzeichnet,**
- **dass** die Sendeeinheit (TU2) eine Lichtquelle (LS') zur Erzeugung des optischen Signals (OS2) umfasst,
- **dass** die Sendeeinheit (TU2) einen Unterbrecher (IR) als Teil der Detektionseinheit umfasst,
- **dass** die Empfangseinheit (TU1) einen Lichtdetektor (LD) umfasst,
- **dass** der Unterbrecher (IR) und der Lichtdetektor (LD) durch einen Lichtwellenleiter (OF2) verbunden sind,
- **dass** der Unterbrecher (IR) zwischen der Lichtquelle (LS) und dem Lichtwellenleiter (OF2) eingefügt ist,
- wobei das optische Signal (OS2) von der Lichtquelle (LS) erzeugt und zu dem Unterbrecher (IR) gesendet wird und nur dann durch den Unterbrecher (IR) geleitet wird, falls die detektierte Kraft kleiner als der vordefinierte Wert ist, und wobei das optische Signal (OS2) in diesem Falle von dem Unterbrecher (IR) zu dem Lichtdetektor (LD) gesendet wird.

7. Anordnung nach einem der vorhergehenden Ansprüche, **dadurch gekennzeichnet, dass** die Lichtquelle (LS, LS') eine Leuchtdiode oder eine Laserdiode ist.

8. Anordnung nach einem der vorhergehenden Ansprüche, **dadurch gekennzeichnet, dass** der Lichtdetektor (LD) eine Fotodiode oder ein Fototransistor ist.

9. Anordnung nach einem der vorhergehenden Ansprüche, **dadurch gekennzeichnet, dass** das übertragene optische Signal (OS1, OS2) eine vordefinierte Wellenlänge und/oder eine vordefinierte Modulation und/oder ein vordefiniertes Muster und/oder eine vordefinierte Frequenz aufweist, um Interferenzen mit optischen Signalen der Umgebung des Blattes (BL) zu vermeiden.

10. Anordnung nach Anspruch 1, **dadurch gekennzeichnet, dass** das Blatt (BL) und die Nabe (HB) Bestandteile einer Windkraftanlage sind.

## Revendications

1. Un agencement destiné à déterminer la vitesse de rotation d'une pale (BL) qui tourne autour d'un axe,
- dans lequel une unité d'émission (TU2) est placée sur la pale rotative (BL),
- dans lequel une unité de réception (TU1) est placée sur le moyeu rotatif (HB) de la pale (BL),
- dans lequel l'unité d'émission (TU2) et l'unité de réception (TU1) sont raccordées par un système de transmission optique qui est utilisé pour transmettre un signal optique (OS2) de l'unité d'émission (TU2) à l'unité de réception (TU1),
- dans lequel l'unité d'émission (TU2) comprend une unité de détection (IR) placée sur la pale,
- dans lequel l'unité de détection (IR) est un interrupteur qui interrompt la transmission du signal (OS2) si la force détectée agissant sur la pale (BL) du fait de sa rotation dépasse une valeur prédéterminée,
- dans lequel l'unité de réception (TU1) comprend une unité de commande (CU) qui détecte une vitesse de rotation élevée (ROS) de la pale (BL) en évaluant la transmission interrompue du signal (OS2),
**caractérisé en ce que** :
- l'interrupteur (IR1, IR2) comprend des éléments mécaniques (W, S, LV, PT, SC, SP) qui sont déplacés en fonction d'une force centrifuge ou centripète (cf), tandis que la force est liée à la vitesse de rotation (ROS) de la pale (BL),
- les éléments mécaniques (W, S, LV, PT, SC, SP) sont couplés à un moyen optique (LTA, LBM), qui interrompt ou permet une transmission du signal optique (OS).

2. L'agencement selon la revendication 1, **caractérisé en ce que** l'unité d'émission (TU2) et l'unité de réception (TU1) sont raccordées avec au moins une fibre optique (OF2) destinée à transmettre le signal optique (OS2).

3. L'agencement selon la revendication 2, **caractérisé en ce que** l'unité de commande est raccordée à une unité de direction (STU) qui fait pivoter la pale (BL) pour l'éloigner du vent dominant si la transmission du signal optique (OS2) est interrompue.

4. L'agencement selon la revendication 1, **caractérisé en ce que**
- l'unité de réception (TU1) fait partie d'une première unité d'émission/réception (TU1), qui comprend une source lumineuse (LS) destinée à la génération d'un premier signal optique (OS1),
- l'unité d'émission (TU2) fait partie d'une deuxième unité d'émission/réception (TU2) qui comprend un capteur optique (SU) pour la réception du premier signal optique (OS1),
- la source lumineuse (LS) et le capteur optique (SU) sont raccordés par une première fibre optique (OF1) destinée à transmettre le premier signal optique (OS1) de la première unité d'émission/réception (TU1) à la deuxième unité d'émission/réception (TU2).

5. L'agencement selon la revendication 4, **caractérisé en ce que**
- la deuxième unité d'émission/réception (TU2) comprend l'interrupteur (IR),
- la première unité d'émission/réception (TU1) comprend un photodétecteur (LD),
- l'interrupteur (IR) et le photodétecteur (LD) sont raccordés par une deuxième fibre optique (OF2),
- l'interrupteur (IR) est inséré entre l'unité capteur (SU) et la deuxième fibre optique (OF2),
- tandis que le premier signal optique (OS1) est généré et envoyé de la source lumineuse (LS) de la première unité d'émission/réception (TU1) à l'unité capteur (SU) de la deuxième unité d'émission/réception (TU2), le premier signal optique (OS1) est reçu par l'unité capteur (SU) et est passé au travers de l'interrupteur (IR) si la force détectée est inférieure à la valeur prédéfinie, et tandis que le premier signal optique (OS1) est renvoyé sous la forme du deuxième signal optique (OS2) de l'interrupteur (IR) au photodétecteur (LD).

6. L'agencement selon la revendication 1, **caractérisé en ce que**
- l'unité d'émission (TU2) comprend une source lumineuse (LS') destinée à la génération du signal optique (OS2),
- l'unité d'émission (TU2) comprend un interrupteur (IR) faisant partie de l'unité de détection,
- l'unité de réception (TU1) comprend un photodétecteur (LD),
- l'interrupteur (IR) et le photodétecteur (LD) sont raccordés par une fibre optique (OF2),
- l'interrupteur (IR) est inséré entre la source lumineuse (LS) et la fibre optique (OF2),
- tandis que le signal optique (OS2) est généré et envoyé de la source lumineuse (LS) à l'interrupteur (IR) et est passé au travers de l'interrupteur (IR) uniquement si la force détectée est inférieure à la valeur prédéfinie, et tandis que le signal optique (OS2) est envoyé dans ce cas de l'interrupteur (IR) au photodétecteur (LD).

7. L'agencement selon l'une quelconque des revendications précédentes, **caractérisé en ce que** la source lumineuse (LS, LS') est une diode électroluminescente ou une diode laser.

8. L'agencement selon l'une quelconque des revendications précédentes, **caractérisé en ce que** le photodétecteur (LD) est une photodiode ou un phototransistor.

9. L'agencement selon l'une quelconque des revendications précédentes, **caractérisé en ce que** le signal optique transmis (OS1, OS2) présente une longueur d'onde prédéfinie et/ou une modulation prédéfinie et/ou un motif prédéfini et/ou une fréquence prédéfinie de façon à éviter des brouillages avec des signaux optiques de l'environnement de la pale (BL).

10. L'agencement selon la revendication 1, **caractérisé en ce que** la pale (BL) et le moyeu (HB) font partie d'une turbine éolienne.
